# EUROPEAN PATENT APPLICATION

(11) **EP 1 322 112 A2**
(43) Date of publication of application: **25.06.2003**
(21) Application number: 02028078.0
(22) Date of filing: 17.12.2002
(51) Int. Cl.: H04N 5/445

(54) **Broadcast program timetable generating apparatus and method thereof**

(30) Priority: 18.12.2001 JP 2001384084
(71) Applicant: Pioneer Corporation, Meguro-ku, Tokyo (JP)
(72) Inventor: Higuchi, Masao, Tokorozawa-City, Saitama (JP); Yamamura, Gaku, Tokorozawa-City, Saitama (JP); Takahashi, Tsutomu, Tokorozawa-City, Saitama (JP); Watanabe, Kazutomo, Tokorozawa-City, Saitama (JP); Inagaki, Katsutoshi, Tokorozawa-City, Saitama (JP); Tanaka, Yoshitaka, Tokorozawa-City, Saitama (JP); Morioka, Ryuichiro, Tokorozawa-City, Saitama (JP); Minoshima, Kunihiro, Tokorozawa-City, Saitama (JP); Hasebe, Tsuyoshi, Tokorozawa-City, Saitama (JP); Shirosaki, Yasuo, Tokorozawa-City, Saitama (JP)
(74) Representative: Betten & Resch

(57) **Abstract**

A method for generating a timetable of broadcast programs includes the steps of receiving a broadcast program guidance; identifying at least one tuner for receiving a broadcast program; obtaining the receiving reservation information including a broadcast time frame and a receiving tuner for each of reserved broadcast programs for all of the identified tuners; detecting an unavailable time frame based on the receiving reservation information, the unavailable time frame representing a time period that the reservation time frames of all the identified tuners are overlapped; and generating a display data for displaying the program guidance and the unavailable time frame.

## Description

### BACKGROUND OF THE INVENTION

### 1. Field of the Invention

The present invention relates to a broadcast program timetable generating apparatus for generating a timetable of broadcast programs and a method thereof.

### 2. Description of the Related Art

In order for a user to select a TV program, it is usual to check a TV program listing page on a newspaper or a TV program information magazine. Alternatively, recently there is a web site showing TV program listings on a web page of the Internet, so that the user may see the TV program listings by a terminal device such as a personal computer or the like. Further, an EPG (Electronic Program Guide) data is broadcast by the digital TV broadcasting together with a TV program, so that, if the user employs a digital broadcasting-compatible TV receiving set, it is also possible to retrieve the electronic program guide from a broadcast wave by remote control and display the EPG on a TV screen. When the electronic program guide and the TV program listings are displayed on a monitor screen such as a TV screen or the like, a TV program listing is shown in the same manner as that of the TV program listings shown the newspaper is employed.

However, according to the conventional EPG display, the programs selected by the user have been distinguished by changing a displayed color or the like. Accordingly, even when a resource (for example, a broadcast receiver or a tuner) was not available for the reason that the resource was reserved for recording at a time frame, the user was not capable of recognizing on the EPG display that he or she could not watch the broadcast program at the time frame.

### OBJECT AND SUMMARY OF THE INVENTION

The present invention has been made in view of the foregoing problems, and it is an object of the present invention to provide a broadcast program timetable generating apparatus capable of notifying the user of a time frame at which the user cannot use the broadcast receiving apparatus and a method thereof.

To achieve the object, according to one aspect of the present invention, there is provided a broadcast program timetable generating apparatus for generating a timetable of broadcast programs, which comprises a program guidance receiver which receives a broadcast program guidance for representing a schedule of the broadcast programs; a tuner identifying unit which identifies at least one tuner for receiving a broadcast program; a reservation information obtaining unit which obtains the receiving reservation information including a broadcast time frame and a receiving tuner for each of the broadcast programs for which receiving has been reserved for all of identified tuners; a detecting unit which detects an unavailable time frame on the basis of the receiving reservation information, the unavailable time frame representing a time period that the reservation time frames of all the identified tuners are overlapped; and a data generating unit which generates display data for displaying the broadcast program guidance and the unavailable time frame.

According to another aspect of the present invention, there is provided a method for generating a timetable of broadcast programs, which comprises the steps of receiving a broadcast program guidance representing a schedule of the broadcast programs; identifying at least one tuner for receiving the broadcast program; obtaining the receiving reservation information including a broadcast time frame and a receiving tuner for each of broadcast programs for which receiving has been reserved for all identified tuners; detecting an unavailable time frame based on the receiving reservation information, the unavailable time frame representing a time period that the reservation time frames of all the identified tuners are overlapped; and generating a display data for displaying the broadcast program guidance and the unavailable time frame.

### BRIEF DESCRIPTION OF THE DRAWINGS

FIG. 1 is a block diagram for schematically illustrating a configuration (a part encircled by a broken line) of a broadcast receiving set in which a broadcast program timetable generating apparatus according to the present invention is provided;
FIG. 2 is a flow chart for showing a timetable display change routine;
FIG. 3 is a flow chart for showing a timetable display change routine; and
FIG. 4 is a view for showing a timetable in the case that a data of that is changed.

### DETAILED DESCRIPTION OF THE PREFERRED EMBODIMENTS

The embodiments according to the present invention will be described in detail with reference to the drawings.

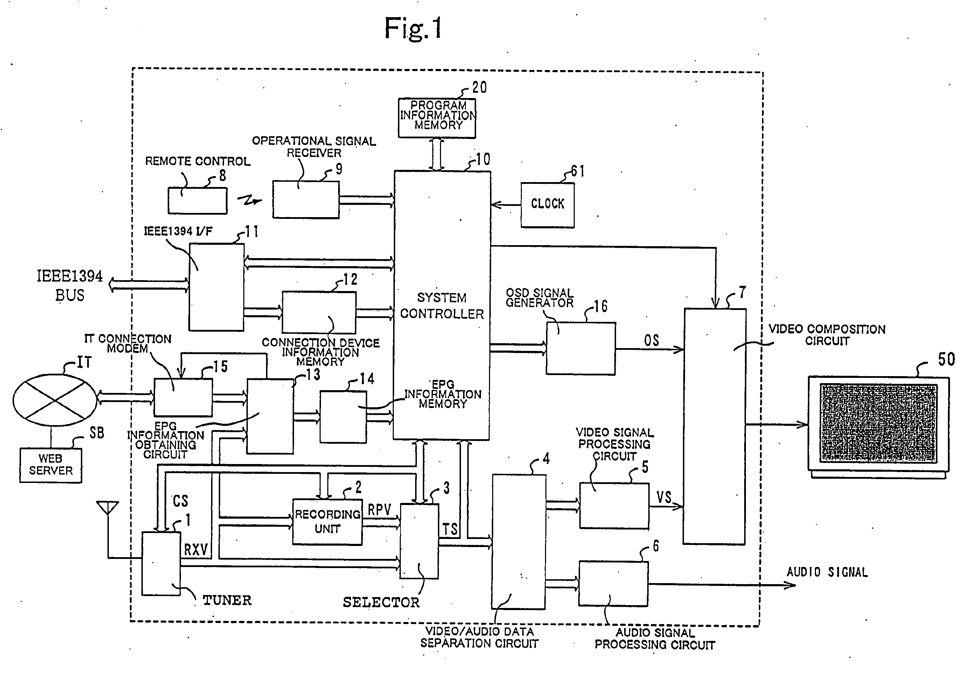

FIG. 1 is a block diagram for schematically illustrating a configuration of a broadcast receiving set (a portion encircled by a broken line) in which a broadcast program timetable generating apparatus according to the present invention is provided.

In FIG. 1, a TV tuner 1 selects a TV broadcast wave (hereinafter, simply referred to as a broadcast wave) from a broadcast station corresponding to a channel which is designated by a channel selection signal CS from among the broadcast waves which are supplied through an antenna or a cable. Then, the TV tuner 1 receives a TV signal RXV by demodulating and outputting a broadcast wave. The received TV signal RXV carries an information block in association with each broadcast program. The TV tuner 1 may be externally attached to the broadcast receiving set in addition to the broadcast program timetable generating apparatus according to the present invention.

In a recording unit 2, a magnetic disk, an optical disk, a magnetic tape or a semiconductor memory or the like are provided as a built-in recording medium and the recording unit 2 stores the received TV signal RXV in the built-in recording medium in accordance with a picture recording start instruction signal which has been supplied from the system controller 10. When a reproduction start instruction signal and a reproduction start address are supplied from the system controller 10, the recording unit 2 reads the TV signal from a position which is indicated by the reproduction start address (i.e., a position within the recording medium) and supplies the signal as a reproduction TV signal RPV to a selector 3. The selector 3 selects a signal in accordance with a selection signal which is supplied from the system controller 10 among the receiving TV signal RXV and the reproduction TV signal RPV and supplies the selected signal as a TV signal TS to a video and audio data separation circuit 4 and the system controller 10. The video and audio data separation circuit 4 separates the TV signal TS into video data and audio data and supplies the video data to a video signal processing circuit 5 and supplies the audio data to an audio signal processing circuit 6, respectively. The audio signal processing circuit 6 outputs an audio signal, which is obtained by applying a predetermined audio demodulation process to the audio data. The video signal processing circuit 5 supplies a video signal VS, which is obtained by applying a predetermined video demodulation processing to the video data, to a video composition circuit 7.

A remote controller 8 is provided with various operational buttons or keys to receive various inputs from the user. The remote controller 8 transmits an operational signal in accordance with an operation selected by the user, to an operational signal receiving circuit 9. The operational signal receiving circuit 9 receives the operational signal transmitted from the remote controller 8 so as to supply the received signal to the system controller 10.

An IEEE1394 interface circuit 11 serves to transmit and receive the video data, the audio data and the control information data to and from various information devices that are connected to an IEEE1394 bus. The information devices that are connected to the IEEE1394 bus includes, for example, a broadcast receiving set or tuner, D-VHS, a hard disk recorder, a DVD recorder and a digital video camera or the like. The IEEE1394 interface circuit 11 packetizes a TV signal (including an MPEG TV signal) which is supplied from the system controller 10 and transmits the packetized signals to the IEEE1394 bus. The IEEE1394 interface circuit 11 receives the video data and the audio data provided from the information devices which are connected to the IEEE1394 bus so as to provide the data to the system controller 10. Further, the IEEE1394 interface circuit 11 receives the device information data supplied from the information devices which are connected to the IEEE1394 bus and stores the data in a connection device information memory 12. Additionally, the device information data includes type of various information devices which are connected to the IEEE1394 bus, the operational status of each information device, the information with regard to contents residing in each information device and the reservation information of each information device.

An EPG information receiving circuit 13 extracts the EPG information data among the received TV signals RXV when the EPG information data is superimposed in the received TV signal RXV which is outputted from the TV tuner 1. The EPG information data extracted in the EPG information obtaining circuit 13 is stored in an EPG information memory 14. The EPG information data includes a program name to be broadcast, a date of broadcasting, a channel number, genre of the program, a time zone or time frame of broadcasting, content of the program and a keyword in association with the content of the program for each broadcast station. The genre of the program classifies the content of the program. For example, the program genre may be news, sports, a drama, a movie, music, a children's program, animation, an educational program or an entertainment program. The keyword regarding content of a program is, for example, cast, an author, a director, a name of a series, a name of a piece or a locality. On the other hand, when the EPG information data is not superimposed in the received TV signal RXV, the EPG information obtaining circuit 13 transmits an EPG demand instruction to an Internet connection modem 15. The Internet connection modem 15 has access to a web server SB which is connected to the Internet (IT) in response to the EPG demand instruction. In the web server SB, the EPG information data is stored to indicate a name of a program to be broadcast, a date of broadcasting, a channel number, the genre of the program, a time frame of broadcasting, the content of the program and a keyword in association with the content of the program or the like for each broadcast station. The web server SB transmits the EPG information data to the Internet connection modem 15 through the Internet IT by the above described access from the Internet connection modem 15. Then, the Internet connection modem 15 receives the EPG information data that has been transmitted through the Internet IT and supplies the data to the EPG information obtaining circuit 13. In this instance, the EPG information obtaining circuit 13 commands an EPG information memory 14 to store the EPG information data that has been supplied from the Internet connection modem 15.

On the basis of various display data that were supplied from the system controller 10, an OSD (On Screen Display) signal generation circuit 16 generates an OSD video signal OS in order to display an image carried by the display data on a screen of a display device 50 to supply the signal to the video composition circuit 7. The video composition circuit 7 supplies the video signal VS with the OSD video signal OS superimposed thereon or any one of the video signal VS and the OSD video signal OS to the display device 50 as a final video signal in response to a video composition control signal to be supplied from the system controller 10. The display device 50 displays the image on the basis of the video signal.

More than one device including tuner functions may be connected to the system controller 10. For example, the TV tuner 1 may be provided with a tuner function capable of receiving a plurality of channels at the same time. The broadcast program receiving set may be connected to the IEEE1394 bus through a network.

A clock 61 with a timer and a calendar function may be connected to the system controller 10. The system controller 10 stores the information data with regard to the program that has been recorded in the recording unit 2 in a program information memory 20. More in detail, various recording information data such as the EPG information data with regard to the recorded program and a time required for the recording or the like are stored as being associated with each other.

The operation of the system controller 10 will be explained in detail below.

The system controller 10 controls the TV tuner 1, the recording unit 2, the selector 3 and the video composition circuit 7 on the basis of the operational signal that has been transmitted from the remote controller 8. For example, if the user performs the station selecting operation by pushing a channel selection button (not illustrated) provided on the remote controller 8, in response to the operation, the system controller 10 supplies a channel selection signal to the TV tuner 1 in order to select a station associated with the channel selection button. Therefore, a TV signal from the broadcast station which has been designated by the channel selection operation is outputted from the TV tuner 1 to be supplied to a display device 50 through the selector 3, the video and audio data separation circuit 4, the video signal processing circuit 5 and the video composition circuit 7. The broadcast program of the broadcast station, which is designated by the channel selection operation, is displayed on a screen of the display device 50. In this case, if the user operates a recording button (not illustrated) which is provided on the remote controller 8, the system controller 10 supplies the recording start instruction signal to the recording unit 2 in response to the operation. Thus, the recording unit 2 records the received TV signal RXV that is outputted from the TV tuner 1 in the built-in recording medium. When the user pushes a reproduction button (not illustrated) provided on the remote controller 8, in response to the operation, the system controller 10 supplies a reproduction start instruction signal to the recording unit 2 and supplies a selection signal to the selector 3 in order to select the reproduction TV signal RPV which has been outputted from the recording unit 2. The reproduction TV signal RPV which has been outputted from the recording unit 2 is supplied to the display device 50 through the selector 3, the video and audio data separation circuit 4, the video signal processing circuit 5 and the video composition circuit 7. Thus, the broadcast program recorded in the recording unit 2 is reproduced and displayed.

When a TV demand signal is supplied from the information devices that are connected to the IEEE1394 bus through the IEEE1394 interface circuit 11, the system controller 10 transmits the TV signal TS which has been outputted from the selector 3 on the IEEE1394 bus through the IEEE1394 interface circuit 11. When a recording demand signal is supplied from the information devices, the system controller 10 stores the TV signal which has been provided through the IEEE1394 bus and the IEEE1394 interface circuit 11 in the recording unit 2.

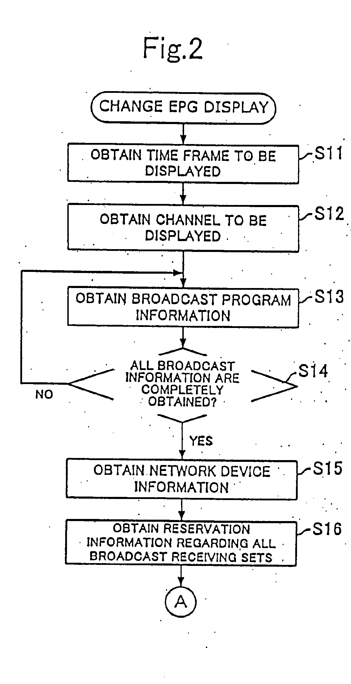

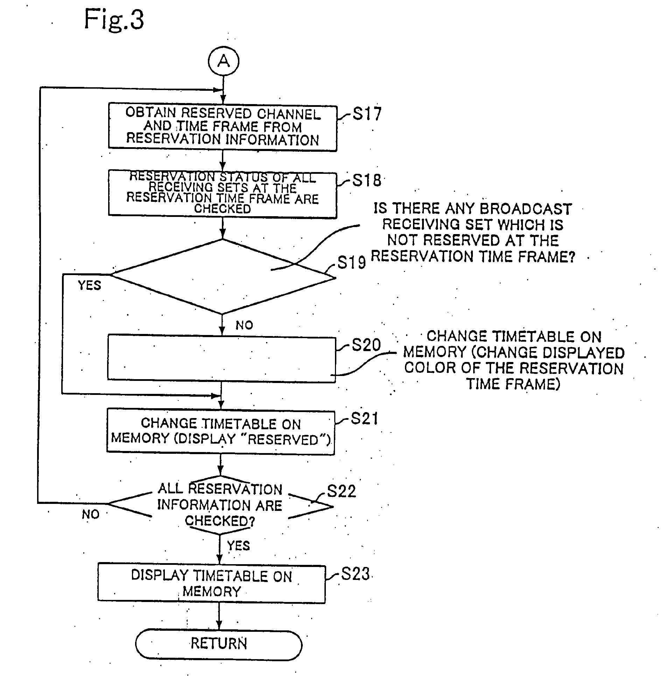

A processing procedure for changing the display of a timetable of a broadcast program (hereinafter, simply refereed to as a timetable) including the reservation information according to the system controller 10 will be described in detail with reference to a flow chart. FIG. 2 and FIG. 3 are process flow charts of a timetable display change routine for changing a timetable display. The display changing processing of the timetable is carried out with respect to an EPG timetable that is generated on an EPG information memory 14 by the system controller 10.

The system controller 10 obtains a time frame to be displayed (step S11). As a time frame to be displayed, for example, a certain time from the present time (for example, three hours, six hours or the like) or a time frame in accordance with the input due to the user's operation is provided. Then, a channel to be displayed is obtained (step S12). As a channel to be displayed, for example, a channel presently in use and a certain number of channels in the vicinity of the channel to be displayed are selected. Alternatively, at least one channel in accordance with the user's input is obtained as a channel to be displayed.

The system controller 10 receives the broadcast program information with regard to the time frame to be displayed and the channel to be displayed (step S13). For example, the system controller 10 obtains the broadcast program information such as a title of a broadcast program, a time of broadcast and a genre of the broadcast program from the EPG information memory 14. Then, it is determined whether or not all broadcast information with regard to the time frame and the channel to be displayed are obtained (step S14). When it is determined that all broadcast information has not been completely obtained, the system controller 10 returns to the step S13.

When it is determined that all broadcast information is completely obtained in the step S14, the system controller 10 receives the information of the broadcast receiving set that is connected thereto through the network (step S15). Then, at a reservation condition obtaining unit in the system controller 10, the system controller 10 receives the reservation information with regard to all broadcast receiving sets including the broadcast receiving set which is connected thereto through the network (step S16). When a plurality of broadcast receiving function modules (i.e., a tuner) is included in one receiving set, the reservation information with regard to all of the modules are obtained.

The information with regard to the reservation time frame and the reserved channel with respect to one reservation are selected from among the obtained reservation information (step S17). The reservation status of all broadcast receiving sets at the reservation time frame is checked (step S18). Then, it is determined whether or not there is a broadcast receiving set which is not reserved at the reservation time frame (namely, whether there is an available receiving set) (step S19). When there is no broadcast receiving set available at the reservation time frame, the system controller 10 changes the data of the timetable on the memory 14 so that the displayed color of the reservation time frame is changed into a certain displayed color indicating that the user cannot watch the program at that timeframe.

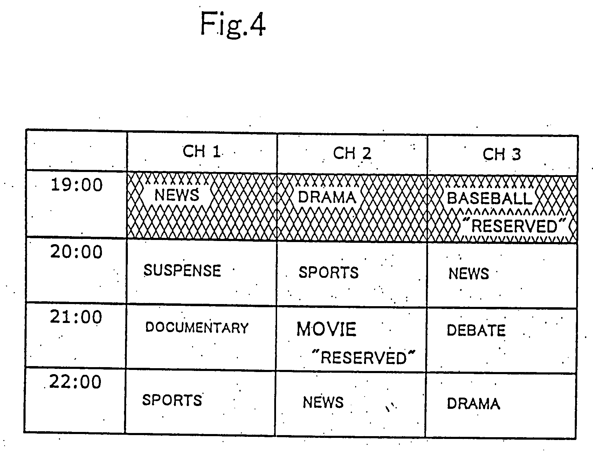

In addition to change of the displayed color, data of a timetable on the memory 14 is changed so as to display or indicate "reserved" with respect to the broadcast program for which recording has been reserved (step S21). For example, when the recording of a broadcast program from 19:00 to 20:00 ("baseball program") on a third channel (CH3) has been reserved as shown in FIG. 4, the displayed color of the time frame is changed and it is clearly shown that there is no available broadcast receiving set at this time frame, so that it is not possible to watch the broadcast program and the timetable is changed so as to display "reserved" with respect to the broadcast program for which recording has been reserved.

On the other hand, in the step S19, when there is other broadcast receiving set which is available at the reservation time frame, the system controller 10 proceeds to step S21 to change data of a timetable so as to display "reserved" with respect to the broadcast program for which recording has been reserved. For example, as shown in FIG. 4, when the recording of the broadcast program from 21:00 to 22 : 00 on a second channel (CH2) (i.e., "movie") has been reserved, without changing the displayed color of the time frame, data of timetable is changed so as to display "reserved" with respect to the broadcast program for which recording has been reserved.

Then, it is determined whether or not all obtained reservation information is completely checked (step S22). If the check is not completed, the system controller 10 repeats the steps from step S17 onward. When the check is completed, the system controller 10 displays the timetable from the memory 14 on the screen of the display device 50 (step S23), and the system controller 10 finishes the present routine.

As described above, according to the present invention, it is possible to grasp the usage status or condition of all broadcast receiving sets at the time frame at which the recording of the broadcast program has been reserved by obtaining the reservation information of all the broadcast receiving sets. Accordingly, it is possible to clearly express to the user that there is no available broadcast receiving set at this time frame so that the user cannot view the broadcast program. In other words, according to the present invention, it is possible to provide a timetable of the broadcast programs whereby a broadcast program capable of being watched can be clearly designated to the user.

The displaying method is not limited to the method described above, in which the displayed color is changed, for displaying that no other broadcast receiving set is available at the reservation time frame so that the user cannot watch the broadcast program. For example, various displaying methods such as changing of the displayed pattern and inverting of display or the like are capable of being employed. Additionally, it is not necessary to display all of the time frames at which the recording of the broadcast programs have been reserved by the same displayed color. When a plurality of broadcast receiving sets (or tuners) are employed, a display method to change the displayed color for each receiving set may be employed. Further, in the present specification, it has been described that character representation is employed to indicate that the broadcast program has been reserved. However, if it is possible to clearly indicate that the broadcast program has been reserved, the display method is not limited to the character representation. Alternatively, the user may be notified of the reservation by notifying means such as by voice.

The invention has been described with reference to the preferred embodiments thereof. It should be understood by those skilled in the art that a variety of alterations and modifications may be made from the embodiments described above. It is therefore contemplated that the appended claims encompass all such alterations and modifications. In summary, the invention can be described as follows:

A method for generating a timetable of broadcast programs includes the steps of receiving a broadcast program guidance; identifying at least one tuner for receiving a broadcast program; obtaining the receiving reservation information including a broadcast time frame and a receiving tuner for each of reserved broadcast programs for all of the identified tuners; detecting an unavailable time frame based on the receiving reservation information, the unavailable time frame representing a time period that the reservation time frames of all the identified tuners are overlapped; and generating a display data for displaying the program guidance and the unavailable time frame.

## Claims

1. A broadcast program timetable generating apparatus for generating a timetable of broadcast programs, comprising:
a program guidance receiver which receives a broadcast program guidance for representing a schedule of said broadcast programs;
a tuner identifying unit which identifies at least one tuner for receiving a broadcast program;
a reservation information obtaining unit which obtains the receiving reservation information including a broadcast time frame and a receiving tuner for each of said broadcast programs for which receiving has been reserved for all identified tuners;
a detecting unit which detects an unavailable time frame based on the receiving reservation information, said unavailable time frame representing a time period that the reservation time frames of all the identified tuners are overlapped; and
a data generating unit which generates display data for displaying said broadcast program guidance and said unavailable time frame.

2. An apparatus according to claim 1, wherein said data generating unit generates the display data for displaying said unavailable time frame by a different display on the screen from the displays for other time frames.

3. An apparatus according to claim 1 or 2, wherein said data generating unit generates the display data for displaying said unavailable time frame by a display of a different color and/or a pattern on the screen from the displays for other time frames except said unavailable time frame.

4. An apparatus according to any of claims 1 to 3, wherein said data generating unit generates the notification data for notifying said unavailable time frame by voice.

5. An apparatus according to any one of claims 1 to 4, wherein said at least one tuner includes a tuner that is connected to a network.

6. An apparatus according to any of claims 1 to 5, wherein said data generating unit generates the notification data for notifying that the receiving of the broadcast program has been reserved.

7. A method for generating a timetable of broadcast programs, comprising the steps of:
receiving a broadcast program guidance which representing a schedule of said broadcast programs;
identifying at least one tuner for receiving said broadcast program;
obtaining the receiving reservation information including a broadcast time frame and a receiving tuner for each of broadcast programs for which receiving has been reserved for all identified tuners;
detecting an unavailable time frame based on the receiving reservation information, said unavailable time frame representing a time period that the reservation time frames of all the identified tuners are overlapped; and
generating a display data for displaying said broadcast program guidance and said unavailable time frame.
